# EUROPEAN PATENT APPLICATION

(11) **EP 4 410 110 A1**
(43) Date of publication of application: **07.08.2024**
(21) Application number: 22876414.8
(22) Date of filing: 29.09.2022
(51) Int. Cl.: A23J 3/14, A23L 5/00, A23L 13/00, A23L 13/40, A23L 13/60

(54) **FORMULATION FOR PRODUCING PLANT-BASED-PROTEIN-CONTAINING FOOD PRODUCT**

(30) Priority: 30.09.2021 JP 2021161949
(71) Applicant: AJINOMOTO CO., INC., Chuo-ku Tokyo 104-8315 (JP)
(72) Inventor: KITAZAWA, Daisuke, Kawasaki-shi, Kanagawa 210-8681 (JP); OGURA, Rie, Kawasaki-shi, Kanagawa 210-8681 (JP); USUGI, Koudai, Kawasaki-shi, Kanagawa 210-8681 (JP)
(74) Representative: Strehl Schübel-Hopf & Partner
(86) International application number: PCT/JP2022/036348
(87) International publication number: WO 2023/054548

(57) **Abstract**

The present invention provides a preparation for the production of a plant protein-containing food, which contains a high molecular rapeseed protein and transglutaminase.

## Description

### [Technical Field]

The present invention relates to a preparation for producing plant protein-containing foods and the like.

### [Background Art]

In recent years, there has been an increase in demand for plant protein-containing foods processed using plant proteins such as soybean protein and the like. These plant protein-containing foods are required to have a texture similar to meat as meat substitute foods.

For example, in plant protein-containing foods, egg white, methylcellulose, and the like are used as binders to impart a texture similar to meat (Patent Literature 1, Patent Literature 2, etc.). However, due to vegetarianism and clean label preferences, there is a demand for substitution of egg white, methylcellulose, etc. with other materials.

Generally, plant protein-containing foods are often produced through a heat processing step. Some existing substitute materials for egg white and methylcellulose, etc. are known to have the property of imparting hardness to dough not only after heat processing but also before heat processing (kneading and molding step). Such substitute materials impart more hardness than necessary to the dough before heat processing, and production suitability during filling (casing) problematically becomes extremely low particularly in paste processed foods such as sausage and the like. Furthermore, some existing plant protein products can themselves be used as clean label binder materials. While the texture of plant protein-containing foods made using those binder materials may be hard, they lack the smoothness and fluffy texture that are felt in regular meat hamburger steak and the like, which is undesirable as the quality of plant protein-containing foods.

On the other hand, methods using enzymes have been developed as a technique for modifying foods. For example, transglutaminase is an enzyme that catalyzes crosslinking of proteins, and is widely used as an enzyme for adhesion of food materials. For example, a method for producing a plant protein-containing food with superior texture by adding transglutaminase and glucose oxidase to soybean hamburger steak has been disclosed (Patent Literature 3). Furthermore, a method for producing modified vegetable protein powder is known in which a calcium compound and/or a magnesium compound and transglutaminase are added to a vegetable protein-containing aqueous solution, followed by heating and drying (Patent Literature 4). However, in recent years, due to increasingly sophisticated consumer preferences, the quality required for plant protein-containing foods has increased, and the development of a method that better achieves both a binding effect and deliciousness while satisfying the above-mentioned preferences is demanded.

### [Citation List]

### [Patent Literature]

[Patent Literature 1]
   JP-A- 2013-9617
[Patent Literature 2]
   JP-A- 2009-268378
[Patent Literature 3]
   WO 2017/154992
[Patent Literature 4]
   JP-A-4-63548

### [Summary of Invention]

### [Technical Problem]

The present invention aims to provide a preparation for the production of a plant protein-containing food, that not only imparts a preferred hardness to plant protein-containing foods before molding and imparts production suitability for a wide range of applications, but also imparts superior hardness, smoothness, fluffy texture, and the like to the foods after heating or cooking, and the like.

### [Solution to Problem]

The present inventors have conducted intensive studies of the above-mentioned problems and found that addition of a high molecular rapeseed protein and transglutaminase in combination in the production step of plant protein-containing foods can not only impart a preferred hardness to the foods before molding and imparts production suitability for a wide range of applications, but also imparts superior hardness, smoothness, fluffy texture, and the like to the foods after heating or cooking. Based on such findings, they conducted further studies and completed the present invention.

Accordingly, the present invention provides the following.

(1) A preparation for the production of a plant protein-containing food, comprising a high molecular rapeseed protein and transglutaminase.
(2) The preparation for food production of the above-mentioned (1), which is for a binder in a plant protein-containing food.
(3) The preparation for food production of the above-mentioned (1) or (2), wherein the plant protein-containing food is a soybean protein-containing food.
(4) The preparation for food production of any of the above-mentioned (1) to (3), wherein the plant protein-containing food is a meat substitute food.
(5) The preparation for food production of the above-mentioned (4), wherein the meat substitute food is a substitute food for minced meat.
(6) The preparation for food production of the above-mentioned (4), wherein the meat substitute food is a substitute food for sausage, a substitute food for patty, or a substitute food for nugget.
(7) The preparation for food production of any of the above-mentioned (1) to (6), wherein the high molecular rapeseed protein is rapeseed globulin.
(8) The preparation for food production of any of the above-mentioned (1) to (7), wherein a content of the high molecular rapeseed protein is 50.0 wt% to 99.9 wt% of the preparation for the production of a plant protein-containing food.
(9) The preparation for food production of any of the above-mentioned (1) to (8), wherein a content of the transglutaminase is an amount corresponding to 0.01U (unit) to 1,000U per 1 g of the preparation for the production of a plant protein-containing food.
(10) The preparation for food production of any of the above-mentioned (1) to (9), further comprising a dietary fiber, a fine powder textured protein, or a textured starch.
(11) The preparation for food production of the above-mentioned (10), wherein the dietary fiber, the fine powder textured protein, and the textured starch have an average particle size of not more than 2,500 um.
(12) A method for producing a plant protein-containing food, comprising a step of adding a high molecular rapeseed protein and transglutaminase to a plant protein-containing composition.
(13) The production method of the above-mentioned (12), wherein the plant protein-containing food is a soybean protein-containing food.
(14) The production method of the above-mentioned (12) or (13), wherein the high molecular rapeseed protein is rapeseed globulin.
(15) The production method of any of the above-mentioned (12) to (14), wherein the high molecular rapeseed protein is used in an amount of 0.0001 g to 5 g per 1 g of the plant protein in the plant protein-containing food.
(16) The production method of any of the above-mentioned (12) to (15), wherein the transglutaminase is used in an amount of 0.01U to 1,000U per 1 g of the plant protein in the plant protein-containing food.

### [Advantageous Effects of Invention]

According to the present invention, a preparation for the production of a plant protein-containing food, that not only imparts a preferred hardness to plant protein-containing foods before molding and imparts production suitability for a wide range of applications, but also imparts superior hardness, smoothness, fluffy texture, and the like to the foods after heating or cooking, and the like are provided.

### [Brief Description of Drawings]

[Fig. 1]

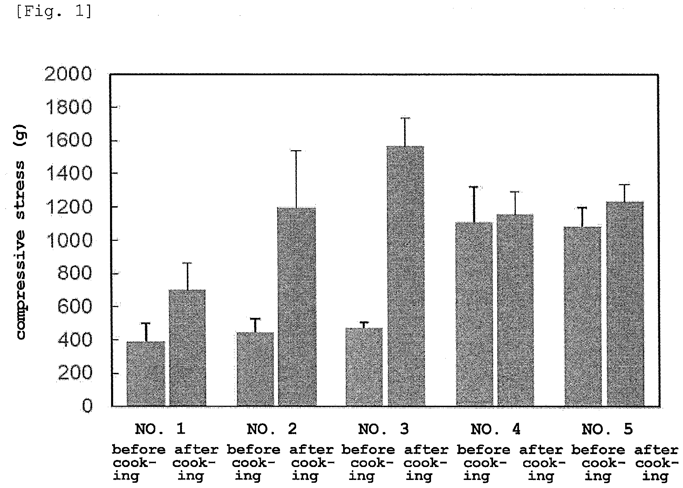

Fig. 1 shows the results of examining the compressive stress of each patty-like food produced in Example 2 before and after cooking using a texture analyzer. The vertical axis represents compressive stress (g), and the numbers on the horizontal axis represent the numbers of respective compositions in Table 7. Furthermore, for each composition, the left side shows data before cooking, and the right side shows data after cooking. Error bars indicate standard error.

### [Description of Embodiments]

### 1. Preparation for the production of plant protein-containing foods

The present invention provides a preparation for the production of a plant protein-containing food, that contains a high molecular rapeseed protein and transglutaminase (hereinafter sometimes to be referred to as "the preparation of the present invention").

In the preparation of the present invention, the high molecular rapeseed protein may be contained in the preparation as a high molecular weight rapeseed protein-containing composition. The high molecular rapeseed protein-containing composition is not particularly limited as long as it contains a high molecular rapeseed-derived protein in an amount effective for achieving the effects of the present invention, and may be a purified high molecular rapeseed protein itself or may contain other component derived from high molecular rapeseed.

It is known that a rapeseed storage protein extracted or produced from a rapeseed (hereinafter sometimes to be referred to as "rapeseed protein") contains two main components, and that one of them is rapeseed globulin (rapeseed cruciferin) which accounts for 60%, and the other is rapeseed albumin (rapeseed napin) which accounts for 20% [Plants, 5(3), p.36 (2016), US Patent No. 10,383,345, etc.]. The high molecular rapeseed protein in the preparation of the present invention means a rapeseed protein having a weight average molecular weight of not less than 15,000, and is preferably rapeseed globulin. Rapeseed globulin is a complex of multiple subunits with an average molecular weight of about 48,000 to 54,000, each of which consists of two polypeptide chains, alpha chain and beta chain, with multiple isoforms present [The Journal of Biological Chemistry, 265(5), p.2720(1990), The Journal of Biological Chemistry, 288(4), p.2238(2013), etc.]. It is known that rapeseed globulin changes its form depending on the surrounding environment and, for example, exists as 300 kDa 12S rapeseed globulin with six subunits under high ionic strength, but reversibly dissociates and exists as 150 kDa 7S rapeseed globulin with three subunits under low ionic strength (12S and 7S represent sedimentation coefficients) (US-B-2019/0307149, etc.). That is, rapeseed globulin exists as either 7S rapeseed globulin or 12S rapeseed globulin, or a mixture thereof. In addition, for example, the amino acid sequences of some of the above-mentioned subunits are disclosed in JP-A-2013-226094 and the like, and the cDNAs thereof are disclosed in The Journal of Biological Chemistry, 265(5) and the like, respectively. The high molecular rapeseed protein used in the present invention is more preferably a mixture of 7S rapeseed globulin and 12S rapeseed globulin.

The operation of separation and the like of a high molecular rapeseed protein can be performed according to, for example, the methods described in Lipid Technology, 27(5), p.112(2015), Food Science and Technology, 64(1), p.308(2015), Plants, 5(3), p.36(2016), US Patent No. 10,383,345, and the like or methods analogous thereto. In addition, a high molecular rapeseed protein used in the present invention may be obtained by fermentation. The high molecular rapeseed protein-containing composition used in the present invention may be a commercially available product. Specific examples include, but are not limited to, "Puratein (registered trade mark) G" (Merit Functional Foods Corporation) and the like.

The content of the high molecular rapeseed protein in the preparation of the present invention is not particularly limited, and is preferably 50.0 wt% to 99.9 wt%, more preferably 60.0 wt% to 99.5 wt%, further preferably 70.0 wt% to 99.0 wt%, of the preparation of the present invention.

In addition, the preparation of the present invention may contain a low molecular rapeseed protein such as rapeseed napin and the like in addition to high molecular rapeseed protein. In the preparation of the present invention, a low molecular rapeseed protein may be contained in the preparation as a low molecular rapeseed protein-containing composition. The low molecular rapeseed protein-containing composition may be a purified low molecular rapeseed protein itself or may contain other component derived from low molecular rapeseed.

When the preparation of the present invention contains a low molecular rapeseed protein-containing composition, the content of the low molecular rapeseed protein in the preparation of the present invention is preferably not more than 100 wt%, more preferably not more than 75 wt%, further preferably not more than 50 wt%, particularly preferably not more than 30 wt%, of the content of the high molecular rapeseed protein, from the aspects of imparting more superior hardness to plant protein-containing foods after heating or cooking.

Transglutaminase (hereinafter sometimes to be referred to as "TG") is an enzyme that has the activity of catalyzing an acyl transfer reaction using a glutamine residue in a protein or peptide as a donor and a lysine residue as a receptor and enzymes of various origins are known, such as those derived from mammals, those derived from fish, and those derived from microorganisms. The origin of the transglutaminase used in the present invention is not particularly limited as long as it has the aforementioned activity, and transglutaminase of any origin can be used, and a recombinant enzyme may also be used. The transglutaminase used in the present invention may be a commercially available product, and specific examples include transglutaminases derived from microorganisms commercially available under the names of "ACTIVA (registered trade mark) [Ajinomoto Co., Inc.]", "KS-CT [Ajinomoto Co., Inc.]", and the like.

The content of the transglutaminase in the preparation of the present invention is not particularly limited, and is preferably an amount corresponding to 0.01U (unit) to 1,000U, more preferably an amount corresponding to 0.05U to 500U, further preferably an amount corresponding to 0.1U to 100U, per 1 g of the preparation of the present invention.

In the present invention, the activity unit of transglutaminase is measured and defined as follows. That is, transglutaminase is allowed to act in a reaction system using benzyloxycarbonyl-L-glutamylglycine and hydroxylamine as substrates in a Tris buffer at a temperature of 37°C and pH 6.0, the resulting hydroxamic acid is allowed to form an iron complex in the presence of trichloroacetic acid, the absorbance at 525 nm is measured, and the amount of hydroxamic acid is determined using a calibration curve, and the amount of enzyme that produces 1 µmol of hydroxamic acid per minute is defined as 1 unit (1U) (see JP-A-64-27471).

In a plant protein-containing food to which the preparation of the present invention can be applied, the plant protein may be contained in the food as a plant protein-containing composition. The plant protein-containing composition is not particularly limited as long as it contains a plant-derived protein, and may be a purified plant protein itself or may contain other component derived from the plant. For example, it includes processed plants with increased protein contents. Specific examples of the plant protein include soybean protein, wheat protein, green pea protein, mung bean protein, fava bean protein, edamame protein, chia seed protein, corn protein, rice protein, buckwheat protein, sweet potato protein, asparagus protein, broccoli protein, avocado protein, oat protein, almond protein and the like, and one or more kinds thereof can be used in combination. As the plant protein, soybean protein is preferred. That is, the preparation of the present invention is preferably a preparation for producing a soybean protein-containing food.

Soybean protein may be contained in the food as a soybean protein-containing composition. The soybean protein-containing composition is not particularly limited as long as it contains soybean-derived protein, and may be purified soybean protein itself or may contain other soybean-derived components. For example, proteins that can be obtained by processing soybeans, such as concentrated soybean protein, separated soybean protein, fibrous soybean protein, extracted soybean protein, and the like can be used. Specific examples include, but are not limited to, "New FUJIPRO 4500" [Fuji Oil Co., Ltd.], "FUJIPRO FR" [Fuji Oil Co., Ltd.], and the like.

The plant protein-containing food in the preparation for the production of a plant protein-containing food of the present invention is not particularly limited, and includes, for example, meat substitute foods and the like. The meat substitute food in the present specification refers to a food that generally contains meat as at least a part of the raw materials, but uses a meat substitute material such as a plant protein instead of the meat. More specifically, meat substitute food includes minced meat substitute foods (minced meat-like food), a substitute food for patty (patty-like food) including, for example, a substitute food for sausage (sausage-like food), and a hamburger steak substitute food (hamburger steak-like food), a substitute food for ham (ham-like food), a substitute food for nugget (nugget-like food), and the like. Among them, a substitute food for sausage, patty, or nugget is preferred, and a substitute food for sausage or patty is more preferred. Besides the above-mentioned meat substitute foods, the plant protein-containing food in the preparation for the production of a plant protein-containing food of the present invention includes a fish meat substitute food that contains fish meat as at least a part of the raw materials, but uses a fish meat substitute material such as a plant protein instead of the fish meat (e.g., substitute food for fish meat sausage (fish meat sausage-like food), substitute food for Kamaboko (Kamaboko-like food), substitute food for Chikuwa (Chikuwa-like food), substitute food for fried fish cake (fried fish cake-like food), etc.).

In one embodiment, the preparation of the present invention is the above-mentioned preparation for the production of a plant protein-containing food which is for a binder in the plant protein-containing food.

A binder is used for the purpose of binding material to prevent food materials from coming apart or falling apart, and the preparation of the present invention is preferably used as a binder to replace egg white, methylcellulose, and the like in the production of plant protein-containing foods.

In one embodiment, the preparation of the present invention can further contain dietary fiber, fine powder textured protein, or textured starch [NeoTrust (registered trademark) W-120, etc.] (hereinafter sometimes collectively referred to as "dietary fiber and the like"). In the preparation of the present invention, dietary fiber and the like can be contained in the preparation as a dietary fiber and the like-containing composition. The dietary fiber and the like-containing composition is not particularly limited as long as it contains dietary fiber and the like, and may be purified dietary fiber and the like themselves, or may contain other components derived from the raw materials.

Examples of the dietary fiber include, but are not limited to, bamboo fiber, citrus fiber, pulp-derived fiber, oat fiber, sunflower fiber, pumpkin fiber, β-glucan, and the like.

The fine powder textured protein means one obtained by pulverizing substances that fall under "granular vegetable protein" or "fibrous vegetable protein" in the Japanese Agricultural Standards JAS0838 (Vegetable Protein) (2019) into a fine powder. The textured starch means starch that has been processed into particles or granules to impart water absorption property and water retention property.

Any starch that is generally used in food may be used, such as potato starch, corn starch, waxy corn starch, rice starch (non-glutinous rice starch, sticky rice starch, etc.), wheat starch, tapioca starch, sweet potato starch, etc., and also high amylose starch, and the like. Starch may be processed starch and examples of the processed starch include oxidized starch obtained by oxidizing the above-mentioned starch, the above-mentioned starch treated with acid, crosslinked starch such as phosphate crosslinked starch obtained by phosphate crosslinking the above-mentioned starch and the like, the above-mentioned starch processed with fats and oils, soy flour, and the like, esterified starch obtained by esterifying the above-mentioned starch to phosphate, acetate, and the like, etherified starch obtained by esterifying the above-mentioned starch to hydroxypropyl ether and the like, the above-mentioned starch processed with a combination of these processes, and the like.

As the dietary fiber and the like, oat fiber is more preferred. By using dietary fiber or the like together with high molecular rapeseed protein and transglutaminase, the adhesiveness during molding of the plant protein-containing food produced using the preparation of the present invention is further improved, and the production suitability is improved.

Dietary fibers and the like preferably have an average particle size of not more than 2,500 µm, more preferably 1 um to 2,500 pm, further preferably 5 µm to 1,000 um, particularly preferably 10 µm to 200 µm.

The average particle size refers to the 50% particle size (median size) in the volume-based cumulative particle size distribution obtained by laser diffraction/scattering method, and is measured using the laser diffraction/scattering particle size distribution analyzer "HORIBA LA-920" [manufactured by Horiba Co., Ltd.], using water as a dispersion medium.

The content of the dietary fiber and the like in the preparation of the present invention is not particularly limited, and is preferably 1 wt% to 50 wt%, more preferably 5 wt% to 45 wt%, further preferably 10 wt% to 40 wt%, of the preparation of the present invention.

In addition, the preparation of the present invention may contain components other than the high molecular rapeseed protein (unless otherwise specified to mean high molecular rapeseed protein itself, it is hereinafter used to include high molecular rapeseed protein-containing composition containing high molecular rapeseed-derived other components) and transglutaminase (and where necessary, dietary fiber and the like), as long as the effects of the present invention are not impaired. As other components, for example, those commonly used in foods can be used, and examples include excipients such as bread crumbs, glucose, dextrin, starch exemplified above, reduced maltose, and the like, oil such as vegetable oil and the like, other proteins such as soybean protein, wheat protein, green pea protein, mung bean protein, fava bean protein, edamame protein, chia seed protein, corn protein, rice protein, buckwheat protein, sweet potato protein, asparagus protein, broccoli protein, avocado protein, oat protein, almond protein, and the like, other enzymes such as glucose oxidase and the like, seasonings such as sodium glutamate, yeast extract, protein hydrolysate, protein partial hydrolysate, and the like, alkaline agents (pH adjusters) such as sodium carbonate, potassium carbonate, calcined calcium, and the like, chelating agents such as gluconic acid, citrate, and the like, redox agents such as sodium ascorbate, glutathione, cysteine, and the like, other food additives such as alginic acid, lye water, dye, acidulant, flavor, and the like. As other components, one kind of component may be used or two ore more kinds thereof may be used in combination.

Examples of the oil include, but are not limited to, vegetable oils such as soybean oil, rapeseed oil, safflower oil, corn oil, perilla oil, linseed oil, sunflower oil, peanut oil, cottonseed oil, olive oil, palm oil, coconut oil, sesame oil, camellia oil, coconut oil, and the like. As the oil, rapeseed oil is more preferred.

The content of the above-mentioned other components in the preparation of the present invention is not particularly limited, and is preferably not more than 30 wt%, more preferably not more than 20 wt%, further preferably not more than 10 wt%, in total, of the preparation of the present invention.

The preparation of the present invention may be in the form of a preparation that contains a high molecular rapeseed protein and transglutaminase (and where necessary, dietary fiber and the like) together, or in the form where each is contained separately and mixed when a plant protein-containing food is produced. The form of a preparation containing all of them together is preferred.

In one embodiment, the high molecular rapeseed protein used in the present invention may be a high molecular rapeseed protein that has been treated with transglutaminase in advance. Here, examples of transglutaminase and high molecular rapeseed protein respectively include those similar to the ones exemplified above. In this embodiment, moreover, the preparation of the present invention may or may not contain transglutaminase separately.

The production method of the preparation of the present invention is now described.

The preparation of the present invention can be produced, for example, by mixing high molecular rapeseed protein and transglutaminase, where necessary, dietary fiber and the like, and further, where necessary, the above-mentioned other components, as they are. The order of mixing is not particularly limited.

In addition, the preparation of the present invention includes preparations in which multiple divided compositions (or one component) are separately produced, such as a preparation in which (a) a first composition (or one component) containing high molecular rapeseed protein and (b) a second composition (or one component) containing transglutaminase are separately produced. It is preferable to produce a preparation in which all components are combined into one.

### 2. Production method of plant protein-containing food

The present invention also provides a method for producing a plant protein-containing food, including a step of adding a high molecular rapeseed protein and transglutaminase to a plant protein-containing composition (hereinafter sometimes to be referred to as "the production method of the present invention"). As used herein, the high molecular rapeseed protein may be a high molecular rapeseed protein that has been treated with transglutaminase in advance. In this case, transglutaminase may or may not be added separately.

Examples of the high molecular rapeseed protein, transglutaminase and plant protein respectively include those similar to the ones exemplified above for the preparation of the present invention.

In the production method of the present invention, the high molecular rapeseed protein and transglutaminase may be mixed and added as a single composition, or they may be produced as separate compositions (or one component) and added at the same time or sequentially.

The amount of the high molecular rapeseed protein (as protein alone) to be used in the production method of the present invention is not particularly limited, and is preferably 0.0001 g to 5 g, more preferably 0.001 g to 1 g, further preferably 0.01 g to 0.5 g, per 1 g of the plant protein in the plant protein-containing food. The amount of the transglutaminase to be used in the production method of the present invention is not particularly limited, and is preferably 0.01U to 1,000U, more preferably 0.05 U to 500 U, further preferably 0.1U to 100U, per 1 g of the plant protein in the plant protein-containing food.

In the production method of the present invention, low molecular rapeseed proteins such as rapeseed napin and the like may be used in addition to the high molecular rapeseed protein. In this case, the amount of the low molecular rapeseed protein to be used is preferably not more than 100 wt%, more preferably not more than 75 wt%, further preferably not more than 50 wt%, further more preferably not more than 30 wt%, of the amount of the high molecular rapeseed protein to be used, from the aspects of imparting more superior hardness to plant protein-containing foods after heating or cooking. In addition, a low molecular rapeseed protein may not be used.

In one embodiment, the production method of the present invention is a production method of the above-mentioned plant protein-containing food in which the plant protein-containing food is a soybean protein-containing food.

In one embodiment, the production method of the present invention is a production method of the above-mentioned plant protein-containing food in which the high molecular rapeseed protein is rapeseed globulin.

In one embodiment, the production method of the present invention is a production method of the above-mentioned plant protein-containing food, including further adding dietary fiber and the like.

Examples of dietary fiber and the like include those similar to the ones exemplified above.

In the production method of the present invention, the dietary fiber and the like may be mixed with high molecular rapeseed protein and/or transglutaminase and added as a single composition, or may be produced as a separate composition (or one component) and added at the same time or sequentially with them.

The amount of the dietary fiber and the like to be used in the production method of the present invention is not particularly limited, and is preferably 0.0001 g to 1 g, more preferably 0.001 g to 0.5 g, further preferably 0.005 g to 0.1 g, per 1 g of the plant protein in the plant protein-containing food.

In the production method of the present invention, components other than the high molecular rapeseed protein and transglutaminase (and where necessary, dietary fiber and the like) may be added as long as the effects of the present invention are not impaired.

Examples of other components include those similar to the ones exemplified above for the preparation of the present invention.

In the production method of the present invention, the above-mentioned other component may be mixed with high molecular rapeseed protein and/or transglutaminase (and where necessary, dietary fiber and the like) and added as a single composition, or may be produced as a separate composition (or one component) and added at the same time or sequentially with them.

The amount of other components to be used in the production method of the present invention is not particularly limited, and is preferably not more than 50 wt%, more preferably not more than 40 wt%, further preferably not more than 30 wt%, of the amount of the plant protein-containing food.

The production method of the present invention can be performed, for example, as shown below.

First, water and oil are added to plant protein and the mixture is stirred to produce an emulsion curd. Then, a plant protein to be a binder and transglutaminase are added to a water reconstitution solution of the plant protein and mixed. Here, high molecular rapeseed protein is added to either the plant protein during production of the emulsion card or the plant protein to be a binder. When the high molecular rapeseed protein is added to the plant protein to be a binder, the above-mentioned preparation of the present invention is preferably used. Alternatively, the plant protein to be a binder, high molecular rapeseed protein, transglutaminase, water and oil may be added to the water reconstitution solution of the plant protein and mixed by stirring without producing an emulsion curd. Even in this case, it is preferable to use the above-mentioned preparation of the present invention. Emulsion curd can also act as a binder.

As the oil, those exemplified above as other components in the preparation of the present invention can be used in the same manner.

Next, a plant protein-containing food can be produced by allowing to stand, heating, or cooking the mixture obtained above. Here, for example, when the plant protein-containing food is a sausage-like food or the like, it is left to stand or heated, and when it is a patty-like food or the like, it is left to stand and then cooked as necessary.

When the plant protein-containing food is a sausage-like food or the like, the standing or heating time is, for example, preferably 3 min to 240 min, more preferably 5 min to 180 min, further preferably 10 min to 120 min. The heating temperature is, for example, preferably 30°C to 90°C, more preferably 40°C to 80°C, further preferably 50°C to 75°C. Sausage-like foods and the like are generally produced by smoking at elevated temperatures of up to about 75°C, but at this temperature, high molecular rapeseed protein does not completely gel. However, by adding high molecular rapeseed protein together with transglutaminase during the production of plant protein-containing sausage-like foods, gelation of the high molecular rapeseed protein is promoted, whereby a sausage-like food having superior hardness, smoothness, fluffy texture and the like before molding and after heating can be provided.

In addition, when the plant protein-containing food is a patty-like food or the like, the cooking time is, for example, preferably 30 sec to 60 min, more preferably 1 min to 30 min, further preferably 2 min to 15 min. The cooking temperature varies depending on food and the like, and is, for example, preferably 100°C to 300°C, more preferably 110°C to 250°C, further preferably 120°C to 200°C. Moreover, it is preferable to allow the food to stand for 10 min to 48 hr, more preferably 30 min to 24 hr, further preferably 60 min to 360 min, after molding and before cooking. When a food is stored frozen before cooking, thawed, and then cooked, the time taken from molding to cooking minus the time during which the enzyme does not act is preferably 10 min to 48 hr, more preferably 30 min to 24 hr, further preferably 60 min to 360 min.

The present invention is described in detail in the following by referring to Examples; however, the present invention is not limited in any way by these Examples.

Unless otherwise specified, the following were used as respective components used in the Examples.
·methylcellulose: "Metolose (registered trade mark)" [Shin-Etsu Chemical Co., Ltd.]
·soybean protein: "New FUJIPRO 4500" [Fuji Oil Co., Ltd.]
·green pea protein: "Nutralys (registered trade mark) S8 5XF proteine de pois" (Roquette)
·mung bean protein: "ORPROTEIN MP-AC" [Organo Food Tech Corporation]
·chia seed protein: "Orplus (registered trade mark) SC" [Organo Corporation]
·high molecular rapeseed protein: "Puratein (registered trade mark) G" (Merit Functional Foods Corporation) (main component: cruciferin)
·low molecular rapeseed protein: "Puratein (registered trade mark) HS" (Merit Functional Foods Corporation) (main component: albumin)
·TG: "KS-CT" [Ajinomoto Co., Inc.]
·bamboo fiber: "UNICELL (registered trade mark) BF200" [Mitsui Sugar Co., Ltd.] (average particle size: 200 µm)
·citrus fiber: "Citri-Fi (registered trade mark) TX10" (Fiberstar, Inc.) (average particle size: 2,460 µm)
·fine powder textured protein: substance obtained by pulverizing "Miracle Meat" (DAIZ Inc.) by grinding machine, and sieved (average particle size :2,000µm)
·pulp-derived fiber: "CEOLUS (registered trade mark) ST-100" [Asahi Kasei Chemicals Co., Ltd.] (average particle size: 50 um)
·oat fiber: "VITACEL (registered trade mark) HF600" (Rettenmaier) (average particle size: 80 µm)
·sunflower fiber: "Sun PRO Himawari" (Food Solutions Team B.V.) (average particle size: 50 µm)
·pumpkin fiber: "Pumpkin PRO" (Food Solutions Team B.V.) (average particle size: 50 µm)
·textured starch: "Neotrust (registered trade mark) W-120" [J-OIL MILLS, Inc.] (average particle size: 1,000 µm)
·β glucan: "β glucan-rich concentrated barley flour" [Mitake Food Manufacturing Co., Ltd.] (average particle size: 50 um)

The evaluation index for each Example is shown in the following Table 1.

**[Table 1]**

| evaluation item | ⊙ | ○ | Δ | × |
|---|---|---|---|---|
| adhesiveness (stickiness) | no stickiness | almost no stickiness | some stickiness, left on hand a little | stickiness, also left on hand |
| hardness | hard and tight | hard | rather soft | soft |
| smoothness | - | smooth | somewhat rough | rough |
| fluffy texture | - | general patty-like fluffy texture is present | somewhat weak fluffy texture is present | no fluffy texture |
| feel on tongue | - | no roughness, no sticky feeling, or the like | some roughness, some sticky feeling, and the like are produced | roughness, sticky feeling and the like are produced |

- adhesiveness: evaluated by adhesiveness (stickiness) to hands during molding
- hardness: evaluated by hardness (difficulty in crumbling) when touched by hand after cooking (in Example 4, after heating) and before cooking (Example 2 only)
- smoothness: evaluated by smoothness (presence or absence of roughness) when touched by hand after cooking
- fluffy texture: evaluated by fluffy texture (presence or absence of fluffy sensation) in the mouth when eaten after cooking
- feel on tongue: evaluated by roughness, stickiness, and the like when eaten after cooking

### [Example]

### Production Example 1 (patty-like food recipe)

A patty-like food is produced as follows at the mixing ratios of Table 2. It becomes the basic recipe used in the following Examples 1 to 3 and 5. In Table 2, the "mixing ratio (%)" means "mixing ratio (wt%)", and the same applies to the following Tables.

**[Table 2]**

| starting material name | | mixing ratio (%) (U/100 g patty only for TG) | | |
|---|---|---|---|---|
| | | methylcellulose (Control) | rapeseed protein (binder) +TG | rapeseed protein (emulsion curd)+TG |
| protein | granular soybean protein | 13.0 | 13.0 | 13.0 |
| | fibrous soybean protein | 8.0 | 8.0 | 8.0 |
| protein water reconstitution solution | water | 43.7 | 43.7 | 43.7 |
| | vegetable oil | 7.0 | 7.0 | 7.0 |
| binder | methylcellulose | 1.0 | | |
| | powder soybean protein | 2.0 | | |
| | powder rapeseed protein | | 1.5 | |
| enzyme | TG (100 U/g) | | 20 | 20 |
| emulsion curd | water | 10.0 | 10.0 | 10.0 |
| | vegetable oil | 2.5 | 2.5 | 2.5 |
| | methylcellulose | 0.5 | | |
| | powder soybean protein | | 2.0 | 2.0 |
| | powder rapeseed protein | | | 1.5 |
| fats and oils | solid vegetable fats and oils | 10.0 | 10.0 | 10.0 |
| seasoning | sodium chloride | 1.0 | 1.0 | 1.0 |
| | onion powder | 0.3 | 0.3 | 0.3 |
| | garlic powder | 0.3 | 0.3 | 0.3 |
| | black pepper | 0.2 | 0.2 | 0.2 |
| | nutmeg | 0.3 | 0.3 | 0.3 |
| | sugar | 0.2 | 0.2 | 0.2 |
| total | | 100.0 | 100.0 | 100.0 |

### (1) Production of emulsion curd

Water and vegetable oil are added to methylcellulose, powder soybean protein, or powder soybean protein and powder rapeseed protein, and the mixture is vigorously stirred to give an emulsion curd.

### (2) Production of patty-like food

The protein is rehydrated using a water reconstitution solution, and mixed with respective components of the emulsion curd obtained above, enzyme, and binder, respective components of fats and oils, and seasoning are further added and mixed, and the mixture is molded. The molded product is cooked at 180°C, rapidly frozen, and then put into a vacuum pouch and stored frozen.

### Production Example 2 (sausage-like food recipe)

A sausage-like food is produced as follows at the mixing ratios of Table 3. It becomes the basic recipe used in the following Example 4.

### (1) Production of emulsion curd

Water and vegetable oil are added to powder soybean protein, or powder soybean protein and powder rapeseed protein, and the mixture is vigorously stirred to give an emulsion curd.

### (2) Production of sausage-like food

The protein is rehydrated using a water reconstitution solution, and mixed with respective components of the emulsion curd obtained above, enzyme, and powder rapeseed protein, or mixed with emulsion curd obtained above and enzyme, respective components of fats and oils, and seasoning are further added and mixed, and the mixture is molded by filling in a casing. The molded product is heated (drying 60°C, warm smoking 60°C, steaming 75°C), cooled, then put into a vacuum pouch, and stored frozen or in a refrigerator.

**[Table 3]**

| starting material name | | mixing ratio (%) (U/100 g sausage only for TG) | |
|---|---|---|---|
| | | rapeseed protein (binder)+TG | rapeseed protein (emulsion curd)+TG |
| protein | granular soybean protein | 10.5 | 10.5 |
| | fibrous soybean protein | 3.5 | 3.5 |
| protein water reconstitution solution | water | 36.0 | 36.0 |
| binder | powder rapeseed protein | 1.5 | |
| enzyme | TG (100 U/g) | 20 | 20 |
| emulsion curd | water | 29.0 | 29.0 |
| | vegetable oil | 7.3 | 7.3 |
| | powder soybean protein | 5.7 | 5.7 |
| | powder rapeseed protein | | 1.5 |
| fats and oils | solid vegetable fats and oils | 4.0 | 4.0 |
| seasoning | grain vinegar | 0.3 | 0.3 |
| | sodium chloride | 1.0 | 1.0 |
| | sodium L-ascorbate | 0.1 | 0.1 |
| | "Ajinomoto" <MSG-FC> | 0.2 | 0.2 |
| | onion powder | 0.2 | 0.2 |
| | garlic powder | 0.3 | 0.3 |
| | black pepper | 0.2 | 0.2 |
| | nutmeg | 0.2 | 0.2 |
| | sage | 0.03 | 0.03 |
| | sugar | 1.0 | 1.0 |
| total | | 101.0 | 101.0 |

### Preliminary Experiment 1 (Effects of various plant proteins as binding materials)

A patty-like food was produced according to the recipe of Production Example 1, except that the emulsion curd and binder were blended as shown in Table 4.

**[Table 4]**

| section | component | mixing ratio (%) | | | | | | | |
|---|---|---|---|---|---|---|---|---|---|
| | | No. 1 (control) | No. 2 (control) | No. 3 | No. 4 | No. 5 | No. 6 | No. 7 | No. 8 |
| emulsion curd | water | 10.0 | 10.0 | 10.0 | 10.0 | 10.0 | 10.0 | 10.0 | 10.0 |
| | rapeseed oil | 2.5 | 2.5 | 2.5 | 2.5 | 2.5 | 2.5 | 2.5 | 2.5 |
| | methylcellulose | 0.5 | | | | | | | |
| | soybean protein | | 2.0 | 2.0 | 2.0 | 2.0 | 2.0 | 2.0 | 2.0 |
| binder | methylcellulose | 1.0 | | | | | | | |
| | egg white | | 3.0 | | | | | | |
| | soybean protein | | | 3.0 | | | | | |
| | green pea protein | | | | 3.0 | | | | |
| | mung bean protein | | | | | 3.0 | | | |
| | chia seed protein | | | | | | 3.0 | | |
| | high molecular rapeseed protein | | | | | | | 3.0 | |
| | low molecular rapeseed protein | | | | | | | | 3.0 |

### soybean protein: "FUJIPRO FR" [Fuji Oil Co., Ltd.]

Each patty-like food was thawed under running water, microwaved at 600W for 40 sec, and three panelists who were experienced in evaluation evaluated the hardness, smoothness, and fluffy texture using the 4-level or 3-level index shown in Table 1.

The results thereof are shown in Table 5.

**[Table 5]**

| evaluation item | No. 1 | No. 2 | No. 3 | No. 4 | No. 5 | No. 6 | No. 7 | No. 8 |
|---|---|---|---|---|---|---|---|---|
| | (control) | egg white (control) | soybean protein | green pea protein | mung bean protein | chia seed protein | high molecular rapeseed protein | low molecular rapeseed protein |
| hardness | ○ | ⊙ | ○ | Δ | Δ | Δ | ○ | Δ |
| smoothness | ○ | ○ | × | × | Δ | Δ | ○ | ○ |
| fluffy texture | ○ | Δ | Δ | Δ | Δ | Δ | Δ | Δ |

As shown in Table 5, the patty-like food (No. 7) produced using high molecular rapeseed protein, among various plant proteins, in combination with soybean protein was comparable in the balance of hardness, smoothness, and fluffy texture as compared with patty-like food (No. 1) produced using methylcellulose and patty-like food (No. 2) produced using egg white in combination with soybean protein, and superior to patty-like foods (Nos. 3 to 6 and 8) produced using other plant proteins in combination with soybean protein.

### Example 1 (Effect of soybean protein + high molecular rapeseed protein + TG)

A patty-like food was produced according to the recipe of Production Example 1, except that the emulsion curd and binder were blended as shown in Table 6 (enzymes in Table 2 were incorporated into the binder).

**[Table 6]**

| section | component | mixing ratio (%) (U/100 g patty only for TG) | | | | | | | | |
|---|---|---|---|---|---|---|---|---|---|---|
| | | control | | | high molecular rapeseed protein added to binder | | | high molecular rapeseed protein added to emulsion curd | | |
| | | No. 1 | No. 2 | No. 3 | No. 4 | No. 5 | No. 6 | No. 7 | No. 8 | No. 9 |
| emulsion curd | water | | 10.0 | 10.0 | 10.0 | 10.0 | 10.0 | 10.0 | 10.0 | 10.0 |
| | rapeseed oil | | 2.5 | 2.5 | 2.5 | 2.5 | 2.5 | 2.5 | 2.5 | 2.5 |
| | methylcellulose | | 0.5 | | | | | | | |
| | soybean protein | | | 2.0 | 2.0 | 2.0 | 2.0 | 2.0 | 2.0 | 2.0 |
| | high molecular rapeseed protein | | | | | | | 1.5 | 3.0 | 1.5 |
| binder | water | 10.0 | | | | | | | | |
| | rapeseed oil | 2.5 | | | | | | | | |
| | methylcellulose | | 1.0 | | | | | | | |
| | egg white | | | 3.0 | | | | | | |
| | soybean protein | 2.0 | 2.0 | | | | | | | |
| | high molecular rapeseed protein | | | | 1.5 | 3.0 | 1.5 | | | |
| | TG (100 U/g) | | | | 20 | | | 20 | | |

### soybean protein (binder): "FUJIPRO FR" [Fuji Oil Co., Ltd.]

Each patty-like food was thawed under running water, microwaved at 600W for 40 sec, and three panelists who were experienced in evaluation evaluated the adhesiveness (stickiness) of a patty-like food before cooking and the hardness, smoothness, and fluffy texture of a patty-like food obtained after cooking, using the 4-level or 3-level index shown in Table 1.

The results thereof are shown in Table 7.

**[Table 7]**

| evaluation item | control | | | high molecular rapeseed protein added to binder | | | high molecular rapeseed protein added to emulsion curd | | |
|---|---|---|---|---|---|---|---|---|---|
| | No. 1 | No. 2 | No. 3 | No. 4 | No. 5 | No. 6 | No. 7 | No. 8 | No. 9 |
| adhesiveness (stickiness) | Δ | ⊙ | Δ | ○ | Δ | Δ | ○ | Δ | Δ |
| hardness | × | ○ | ⊙ | ○ | ○ | Δ | ○ | ○ | Δ |
| smoothness | Δ | ○ | ○ | ○ | Δ | Δ | ○ | Δ | Δ |
| fluffy texture | Δ | ○ | Δ | ○ | Δ | Δ | ○ | Δ | Δ |

As shown in Table 7, the patty-like foods (Nos. 4 and 7) produced by adding high molecular rapeseed protein and TG in addition to soybean protein were comparable or more superior in the adhesiveness of a patty-like food before cooking and the balance of the hardness, smoothness, and fluffy texture of a patty-like food obtained after cooking, as compared with the patty-like food (No. 2) produced by adding methylcellulose and the patty-like food (No. 3) produced by adding egg white in combination with soybean protein. There was no difference in this effect between when high molecular rapeseed protein was added to the binder and when it was added to the emulsion curd.

### Example 2 (Effect of combination of high molecular rapeseed protein and TG against existing techniques)

A patty-like food was produced according to the recipe of Production Example 1, except that the emulsion curd and binder were blended as shown in Table 8 (enzymes in Table 2 were incorporated into the binder).

**[Table 8]**

| section | component | mixing ratio (%) (U/100 g patty only for TG) | | | | |
|---|---|---|---|---|---|---|
| | | No. 1 (control) | No. 2 (control) | No. 3 | No. 4 (comparison) | No. 5 (comparison) |
| emulsion curd | water | | 10.0 | 10.0 | 10.0 | 10.0 |
| | rapeseed oil | | 2.5 | 2.5 | 2.5 | 2.5 |
| | methylcellulose | | 0.5 | | | |
| | soybean protein | | | 2.0 | 2.0 | 2.0 |
| | high molecular rapeseed protein | | | 1.5 | | |
| binder | water | 11.5 | | | | |
| | rapeseed oil | 2.5 | | | | |
| | methylcellulose | | 1.0 | | | |
| | soybean protein | 2.0 | 2.0 | | | |
| | high molecular rapeseed protein | | | | | |
| | TG (100 U/g) | | | 20 | | |
| | citrus fiber | | | | 4.0 | 4.0 |
| | pectin methylesterase (10 U/ml) | | | | | 0.8 |
| | calcium sulfate | | | | 0.2 | 0.1 |

citrus fiber: "Citri-Fi (registered trademark) TX10" (Fiberstar, Inc.)
pectin methylesterase: "Novoshape (registered trademark)" (Novozymes A/S)

Each patty-like food was thawed under running water, microwaved at 600W for 40 sec, and four panelists who were experienced in evaluation evaluated the adhesiveness (stickiness) and hardness of a patty-like food before cooking and the hardness, softness, and fluffy texture of a patty-like food obtained after cooking, using the 4-level or 3-level index shown in Table 1.

The results thereof are shown in Table 9.

**[Table 9]**

| evaluation item | | No. 1 (control) | No. 2 (control) | No. 3 | No. 4 (comparison) | No. 5 (comparison) |
|---|---|---|---|---|---|---|
| before cooking | adhesiveness (stickiness) | Δ | ⊙ | ○ | ○ | ○ |
| | hardness | × | ○ | Δ | (*) | (*) |
| after cooking | smoothness | Δ | ○ | ○ | Δ | Δ |
| | fluffy texture | Δ | ○ | ○ | Δ | Δ |
| | hardness | × | ○ | ⊙ | ○ | ○ |

### (*): being too hard, applicable menus are limited

As shown in Table 9, the patty-like food (No. 3) produced using a combination of high molecular rapeseed protein and TG was superior in the hardness of a patty-like food before cooking and the balance of the hardness, smoothness, and fluffy texture of a patty-like food obtained after cooking, as compared with the patty-like food (No. 4) produced using citrus fiber and the patty-like food (No. 5) produced using citrus fiber, pectin methyl esterase, and calcium sulfate, which are existing techniques of Novozyme A/S. In addition, since the above-mentioned patty-like foods No. 4 and No. 5 become too hard before cooking, applicable menus are limited. In contrast, the patty-like food (No. 3) produced using a combination of high molecular rapeseed protein and TG had a suitable hardness that was slightly soft before cooking, and thus was free of restriction on the menus applicable thereafter (wide range of application) and superior.

Furthermore, for each of the patty-like foods obtained above, the compressive stress before and after cooking was examined using a texture analyzer "TA-XT-plus" (manufactured by Stable Microsystems). Patty-like food blocks before and after cooking and cut into 1.5 cm squares were compressed using a cylindrical plunger, and the stress (g) at 60% compression was measured.

The results thereof are shown in Fig. 1. As shown in Fig. 1, the compression stress after cooking of the patty-like food (No. 3) produced using a combination of high molecular rapeseed protein and TG was markedly higher than that of the patty-like food (No. 2) produced using methylcellulose. In the patty-like food (No. 4) produced using citrus fiber and the patty-like food (No. 5) produced using citrus fiber, pectin methyl esterase, and calcium sulfate, which are existing techniques of Novozyme A/S, the compressive stress before cooking was higher than that of the patty-like food (No. 2) produced using methylcellulose, but it remained almost unchanged after cooking and the compressive stress after cooking was inferior to that of the patty-like food (No. 3) produced using a combination of high molecular rapeseed protein and TG.

)

### Example 3 (Effect of high molecular rapeseed protein vs effect of low molecular rapeseed protein)

A patty-like food was produced according to the recipe of Production Example 1, except that the emulsion curd and binder were blended as shown in Table 10 (enzymes in Table 2 were incorporated into the binder).

**[Table 10]**

| section | component | mixing ratio (%) (U/100 g patty only for TG) | | | | |
|---|---|---|---|---|---|---|
| | | high molecular rapeseed protein | low molecular rapeseed protein | high molecular rapeseed protein + low molecular rapeseed protein | | |
| | | No. 1 | No. 2 | No. 3 | No. 4 | No. 5 |
| emulsion curd | water | 10.0 | 10.0 | 10.0 | 10.0 | 10.0 |
| | rapeseed oil | 2.5 | 2.5 | 2.5 | 2.5 | 2.5 |
| | soybean protein | 2.0 | 2.0 | 2.0 | 2.0 | 2.0 |
| | high molecular rapeseed protein | 1.5 | | 1.5 | 1.5 | 1.5 |
| | low molecular rapeseed protein | | 1.5 | 0.5 | 1.0 | 1.5 |
| binder | TG (100U/g) | 20 | 20 | 20 | 20 | 20 |

Each patty-like food was thawed under running water, microwaved at 600W for 40 sec, and three panelists who were experienced in evaluation evaluated the hardness of a patty-like food obtained after cooking, using the 4-level index shown in Table 1.

The results thereof are shown in Table 11.

**[Table 11]**

| evaluation item | high molecular rapeseed protein | low molecular rapeseed protein | high molecular rapeseed protein + low molecular rapeseed protein | | |
|---|---|---|---|---|---|
| | No.1 | No. 2 | No. 3 | No. 4 | No. 5 |
| hardness | ⊙ | Δ | ⊙ | ○ | Δ |

As shown in Table 11, the patty-like food (No. 1) produced by adding only a high molecular rapeseed protein was superior to the patty-like food (No. 2) produced by adding only a low molecular rapeseed protein in the hardness of the patty-like foods obtained after cooking. As the amount of a low molecular rapeseed protein added to the high molecular rapeseed protein became higher, the hardness of the patty-like foods (Nos. 3 to 5) obtained after cooking was further decreased.

### Example 4 (TG reaction time reduction effect of high molecular rapeseed protein)

A sausage-like food was produced according to the recipe of Production Example 2, except that the emulsion curd and binder were blended as shown in Table 12 (enzymes in Table 3 were incorporated into the binder).

**[Table 12]**

| section | component | mixing ratio (%) (U/100 g sausage only for TG) | | | |
|---|---|---|---|---|---|
| | | No.1 (control) | No. 2 | No. 3 | No. 4 |
| emulsion curd | water | 28.5 | 28.5 | 28.5 | 28.5 |
| | rapeseed oil | 7.2 | 7.2 | 7.2 | 7.2 |
| | soybean protein | 5.7 | 5.7 | 5.7 | 5.7 |
| binder | high molecular rapeseed protein | 3.0 | 1.5 | 1.5 | |
| | TG (100 U/g) | | 20 | 10 | 20 |

Each sausage-like food was thawed under running water, microwaved at 600W for 30 sec, and four panelists who were experienced in evaluation evaluated the hardness of a sausage-like food heated immediately after molding (0 hr) and a sausage-like food heated after standing for 6 hr after molding, using the 4-level index shown in Table 1. Regarding the control (No. 1), since there was no TG and the time was irrelevant, it was evaluated only immediately after microwaving (0 hr).

The results thereof are shown in Table 13.

**[Table 13]**

| evaluation item | No. 1 (control) | No. 2 | No. 3 | No. 4 | No. 2 | No. 3 | No. 4 |
|---|---|---|---|---|---|---|---|
| | 0 hr | 0 hr | | | 6 hr | | |
| hardness | × | ○ | ○ | Δ | ⊙ | ⊙ | ○ |

Although not described in the Table, even when a sausage-like food is produced by adding only TG, a sausage-like food with sufficient hardness can be obtained by, for example, heating after overnight standing. In fact, a sausage-like food with sufficient hardness was obtained by heating after standing for 17 hr. However, as shown in Table 13, when the sausage-like food was prepared by adding only TG (No. 4), tight hardness was not obtained yet when it was heated after standing for 6 hr. On the other hand, when sausage-like foods were produced by adding high molecular rapeseed protein to TG (Nos. 2 and 3), hard and tight sausage-like foods were obtained even by heating after standing for 6 hr.

### Example 5 (Effect of dietary fiber and the like)

A patty-like food was produced according to the recipe of Production Example 1, except that the emulsion curd and binder were blended as shown in Table 14 (enzymes in Table 2 were incorporated into the binder).

**Table 14]**

| section | component | mixing ratio (%) (U/100 g patty only for TG) | | | | | | | | | | |
|---|---|---|---|---|---|---|---|---|---|---|---|---|
| | | control | no addition | dietary fiber and the like added | | | | | | | | |
| | | No. 1 | No. 2 | No. 3 | No. 4 | No. 5 | No. 6 | No. 7 | No. 8 | No. 9 | No. 10 | No.11 |
| emulsion curd | water | 10.0 | 10.0 | 10.0 | 10.0 | 10.0 | 10.0 | 10.0 | 10.0 | 10.0 | 10.0 | 10.0 |
| | rapeseed oil | 2.5 | 2.5 | 2.5 | 2.5 | 2.5 | 2.5 | 2.5 | 2.5 | 2.5 | 2.5 | 2.5 |
| | methylcellulose | 0.5 | | | | | | | | | | |
| | soybean protein | | 2.0 | 2.0 | 2.0 | 2.0 | 2.0 | 2.0 | 2.0 | 2.0 | 2.0 | 2.0 |
| | high molecular rapeseed protein | | 1.5 | | | | | 1.5 | 3.0 | 1.5 | 1.5 | 1.5 |
| binder | water | | | | | | | | | | | |
| | rapeseed oil | | | | | | | | | | | |
| | methylcellulose | 1.0 | | | | | | | | | | |
| | soybean protein | 2.0 | | | | | | | | | | |
| | bamboo fiber | | | 1.0 | | | | | | | | |
| | citrus fiber | | | | 1.0 | | | | | | | |
| | fine powder textured protein | | | | | 1.0 | | | | | | |
| | pulp-derived fiber | | | | | | 1.0 | | | | | |
| | oat fiber | | | | | | | 1.0 | | | | |
| | sunflower fiber | | | | | | | | 1.0 | | | |
| | pumpkin fiber | | | | | | | | | 1.0 | | |
| | textured starch | | | | | | | | | | 1.0 | |
| | β glucan | | | | | | | | | | | 1.0 |
| | TG (100 U/g) | | 20 | 20 | 20 | 20 | 20 | 20 | 20 | 20 | 20 | 20 |

Each patty-like food was thawed under running water, microwaved at 600W for 40 sec, and three panelists who were experienced in evaluation evaluated the adhesiveness (stickiness) of a patty-like food before cooking and the texture of a patty-like food obtained after cooking, using the 4-level or 3-level index shown in Table 1.

The results thereof are shown in Table 15.

**Table 15]**

| evaluation item | control | no addition | dietary fiber and the like added | | | | | | | | |
|---|---|---|---|---|---|---|---|---|---|---|---|
| | No. 1 | No. 2 | No. 3 | No. 4 | No. 5 | No. 6 | No. 7 | No. 8 | No. 9 | No. 10 | No. 11 |
| adhesiveness (stickiness) | ○ | ○ | ○-⊙ | ○-⊙ | ○-⊙ | ○-⊙ | ⊙ | ○-⊙ | ○-⊙ | ○-⊙ | ○-⊙ |
| feel on tongue | ○ | ○ | ○ | Δ | ○ | Δ | Δ | Δ | Δ | Δ | Δ |

As shown in Table 15, the adhesiveness (stickiness) of the patty-like food before cooking was improved by using a high molecular rapeseed protein concurrently with dietary fiber and the like, particularly oat fiber.

### [Industrial Applicability]

According to the present invention, a preparation for the production of a plant protein-containing food, that not only imparts, by using the preparation in the production of plant protein-containing foods, a preferred hardness to the plant protein-containing foods before molding and imparts production suitability for a wide range of applications, but also imparts superior hardness, smoothness, fluffy texture, and the like to the foods after heating or cooking, and the like are provided. By using the preparation, for example, a meat-like texture can be imparted to plant protein-containing foods, which are meat substitute foods, without using egg white, methylcellulose, and the like, thereby satisfying the increasing preferences for vegetarianism and clean labeling. Therefore, the present invention is useful in the food industry field.

This application is based on a patent application No. 2021-161949 filed in Japan (filing date: September 30, 2021), the contents of which are incorporated in full herein.

## Claims

1. A preparation for the production of a plant protein-containing food, comprising a high molecular rapeseed protein and transglutaminase.

2. The preparation for food production according to claim 1, which is for a binder in a plant protein-containing food.

3. The preparation for food production according to claim 1 or 2, wherein the plant protein-containing food is a soybean protein-containing food.

4. The preparation for food production according to claim 1 or 2, wherein the plant protein-containing food is a meat substitute food.

5. The preparation for food production according to claim 4, wherein the meat substitute food is a substitute food for minced meat.

6. The preparation for food production according to claim 4, wherein the meat substitute food is a substitute food for sausage, a substitute food for patty, or a substitute food for nugget.

7. The preparation for food production according to claim 1 or 2, wherein the high molecular rapeseed protein is rapeseed globulin.

8. The preparation for food production according to claim 1 or 2, wherein a content of the high molecular rapeseed protein is 50.0 wt% to 99.9 wt% of the preparation for the production of a plant protein-containing food.

9. The preparation for food production according to claim 1 or 2, wherein a content of the transglutaminase is an amount corresponding to 0.01U (unit) to 1,000U per 1 g of the preparation for the production of a plant protein-containing food.

10. The preparation for food production according to claim 1 or 2, further comprising a dietary fiber, a fine powder textured protein, or a textured starch.

11. The preparation for food production according to claim 10, wherein the dietary fiber, the fine powder textured protein, and the textured starch have an average particle size of not more than 2,500 µm.

12. A method for producing a plant protein-containing food, comprising a step of adding a high molecular rapeseed protein and transglutaminase to a plant protein-containing composition.

13. The production method according to claim 12, wherein the plant protein-containing food is a soybean protein-containing food.

14. The production method according to claim 12 or 13, wherein the high molecular rapeseed protein is rapeseed globulin.

15. The production method according to claim 12 or 13, wherein the high molecular rapeseed protein is used in an amount of 0.0001 g to 5 g per 1 g of the plant protein in the plant protein-containing food.

16. The production method according to claim 12 or 13, wherein the transglutaminase is used in an amount of 0.01U to 1,000U per 1 g of the plant protein in the plant protein-containing food.
